# EUROPEAN PATENT SPECIFICATION

(11) **EP 1 757 552 B1**
(45) Date of publication and mention of the grant of the patent: **03.12.2008**
(21) Application number: 06119528.5
(22) Date of filing: 25.08.2006
(51) Int. Cl.: B65H 69/08, B29C 53/80

(54) **Auto-splice apparatus and method for a fiber placement machine**
Automatische Spleissvorrichtung und Verfahren zum automatischen Spleissen für eine Faserauflegemaschine
Episseur automatique et procédé d'épissage automatique pour une machine de placement de fibres

(30) Priority: 25.08.2005 US 711292 P
(43) Date of publication of application: 28.02.2007
(73) Proprietor: Ingersoll Machine Tools, Inc., Rockford IL 61103 (US)
(72) Inventor: Tingley, Mark Curtis, Hutsonville, Illinois 62433 (US)
(74) Representative: Hoeger, Stellrecht & Partner Patentanwälte

(56) References cited:
- EP-A- 0 749 924
- US-A- 4 428 992
- US-A- 5 266 139
- US-A1- 2005 037 195

## Description

### FIELD OF THE INVENTION

This invention relates to the forming of composite structures with automated fiber placement machines, and more particularly to splicing of filament tows during the fiber placement process.

### BACKGROUND OF THE INVENTION

Automated fiber placement machines are widely used to manufacture parts, components and structures from composite material. The materials used in automated fiber placement are typically composed of longitudinal fibers and resin consolidated into tapes, or thin strips, commonly known as "tows." Individual tapes or tows are manipulated by the fiber placement machine to form a band of material that is deposited onto a tool. Parts are built up layer-by-layer, with tapes or tows of composite material, with the angle at which each layer "ply" is laid onto the tool being precisely determined by the fiber placement machine.

Automated fiber placement enables the construction of complex composite structures having steered or curvilinear fiber paths. This method of producing composite structures is more cost effective than manual methods. It provides an improved structural efficiency due to its ability to orient the fibers along local internal loads paths, which potentially results in lighter structures and lower costs than in structures made by other production methods.

Particularly where parts of large physical size are being formed, it is not uncommon for one or more tows of material to need to be spliced during the automated fiber placement process. It is highly desirable, in such circumstances, to provide a method and/or apparatus for automatically splicing a new length of fiber tow, from a fresh supply spool, onto the distal end of the tow, in such a manner that any interruption to the automated fiber placement process is minimized.

Previous methods for splicing the tail end of a first fiber tow to the lead end of a second fiber tow have typically involved having an operator overlap a portion of the tail end of the first fiber tow onto a portion of the lead end of the second fiber tow, and squeezing the overlapped portions of the tows together with sufficient finger pressure to cause the resin in the overlapped portions of the tows to bond together sufficiently for the splice to have adequate strength for allowing the feed rolls of the fiber placement head to pull the spliced tow through the fiber placement machine and fiber placement head for deposition onto the surface of a tool by a compression roller of the fiber placement head. This procedure relies heavily on the skill of an individual operator and thereby introduces undesirable variation into the process of making the splice. The former practice of having the splice made by finger pressure of an operator also takes longer than is desirable.

Document US 2005 0037 195 discloses an auto-splice apparatus and a method therefor, for assissting an operator in splicing the tail end of a first fiber to the lead end of a second fiber.

It is desirable, therefore, to provide an improved method and apparatus for assisting an operator in splicing the tail end of a first fiber tow to the lead end of a second fiber tow, during an automated fiber placement process, in a manner which addresses and at least partially alleviates one or more of the problems and disadvantages of the prior methods and apparatuses, some of which have been discussed above.

### BRIEF SUMMARY OF THE INVENTION

The invention provides an auto-splice apparatus, and a method for using an auto-splice apparatus, for assisting an operator in splicing the tail end of a first fiber tow to the lead end of a second fiber tow, where the first fiber tow is being fed from a first reel of the first fiber tow to a fiber placement head of a fiber placement machine, and the second fiber tow is being fed from a second reel of the second fiber tow, with the auto-splice apparatus including, an operator actuated welding device for clamping together and applying heat to overlapped portions of the tail end of the first fiber tow and the lead end of the second fiber tow.

In one form of the invention, a method for assisting an operator in splicing the tail end of a first fiber tow to the lead end of a second fiber tow, using an auto-splice apparatus, according to the invention, includes the operator initiating a first phase of the slicing process, performed by the auto-splice apparatus, in which the auto-splice apparatus sequentially clamps the tail end of the first tow extending from the fiber placement head, and trims the tail end of the first tow to a desired length to form a trimmed tail end of the first tow. The operator then feeds the lead end of the second tow into the auto-splice apparatus, with the auto-splice apparatus guiding the lead end into an overlapped position adjacent the trimmed tail end of the first fiber tow, to form overlapped portions of the first and second fiber tows. The operator then initiates a second phase of the splicing process, performed by the auto-splice apparatus, in which the auto-splice apparatus welds together the overlapped portions of the first and second tows, and then unclamps the tail end of the first fiber tow.

A method, according to the invention, may also include detecting a low material condition in the first reel of the fiber tow, and stopping the feed of the first fiber tow to the fiber placement head prior to initiating the first phase of the splicing process. The method may further include re-starting the feed of the trimmed tail end of the first fiber tow, having the second fiber tow welded thereto, to the fiber placement head, following completion of the second phase of the splicing process.

Where the first reel is operatively mounted within a creel operatively attached to the fiber placement head, a method, according to the invention, may include having the operator replace the first reel with a second reel, by removing the first reel and operatively mounting the second reel within the creel in place of the first reel, between the first and second phases of the splicing process.

Where the first and second reels are separately operatively mounted within a creel operatively attached to the fiber placement head, with only the first reel being operatively connected to the fiber placement head prior to initiating the splicing process, a method, according to the invention, may further include having the operator feed the lead end of the second fiber tow into the auto-splice apparatus, between the first and second phases of the splicing process.

In some forms of the invention, welding the overlapped portions of the first and second fiber tows together may include the steps of: clamping the overlapped portions of the first and second fiber tows together between a welding head and a support surface with a clamping pressure; applying heat to the overlapped portions with the welding head, for a period of time, to thereby weld the overlapped portions together; and, unclamping the overlapped portions following completion of the weld. The invention may further include controlling one or more of the clamping pressure, the heat applied by the welding head, and/or the period of time, to desired values thereof. Welding the overlapped portions of the first and second fiber tows together, according to the invention, may also include cooling the overlapped portions subsequent to forming the weld.

Where the first reel is operatively mounted in a first creel, and the second reel is operatively mounted in a second creel, with the first and second creels being configured for operative alternate attachment to the fiber placement machine, the invention may further include detaching the first creel from the fiber placement machine and operatively attaching the second creel to the fiber placement machine in place of the first creel. The invention may further include operating the fiber placement machine with a second fiber tow from the second creel, while the first creel is detached from the fiber placement machine. The invention may also include replenishing the first creel, with different first reels of first fiber tows, while the first creel is detached from the fiber placement machine.

In forms of the invention utilizing interchangeable first and second creels, an auto-splice apparatus, according to the invention, may have a first half thereof disposed within the fiber placement machine for clamping and trimming the tail end of the first tow, and for welding the overlapped portions of the first and second tows. The auto-splice apparatus may also have multiple second halves thereof, with one of the multiple second halves being disposed in the first creel and another of the multiple second halves being disposed in the second creel. The second halves may be configured for clamping the respective lead ends of the first and second tows within the first and second creels respectively, when the first and second creels are not operatively connected to the fiber placement machine. The second halves may be further configured for feeding the lead ends of the first and second fiber tows, respectively, into the first half of the auto-splice apparatus, when the respective first or second creel is operatively attached to the fiber placement machine.

The respective lead ends of the first and second tows, within the first and second creels respectively, may be clamped by the second halves of the auto-splice apparatus, when the first and second creels are not operatively connected to the fiber placement machine. The second halves of the auto-splice apparatus may also feed the lead ends of the first and second fiber tows, respectively, into the first half of the auto-splice apparatus, when the respective first or second creel is operatively attached to the fiber placement machine, and the second phase of the auto-splice process is initiated.

In forms of the invention where the fiber placement head is receiving multiple first tows from multiple first reels of the first creel, and where the second creel includes multiple second reels for feeding multiple second fiber tows to the fiber placement head, the first phase of the splicing process, according to the invention, may include, simultaneously clamping and trimming all of the first fiber tows, prior to detachment of the first creel from the fiber placement machine. In other forms of the invention, all of the first fiber tows may be sequentially clamped and trimmed, prior to detachment of the first creel from the fiber placement machine.

In some forms of the invention, a single auto-splice apparatus, according to the invention, may be movable, between multiple tows fed from a creel, for performing the splicing process, according to the invention.

One form of an auto-splice apparatus, according to the invention, includes an operator actuated welding device, for clamping together and applying heat to overlapped portions of the tail end of the first fiber tow and the lead end of the second fiber tow.

In an auto-splice apparatus, according to the invention, for assisting an operator in splicing the tail end of a first fiber tow to the lead end of a second fiber tow, wherein the first fiber tow is being fed from a first reel of the first fiber tow to a fiber placement head of the fiber placement machine, and the second fiber tow is being fed from a second reel of the second fiber tow, the auto-splice apparatus may include a tail end clamping device, a tail end trimming device, a welding device, and a two-position operator activated control element operatively connecting the tail end clamping device, the tail end trimming device, and the welding device.

The tail end clamping device, the tail end trimming device, the welding device, and the two-position operator activated control element may be operatively disposed and interconnected in such a manner that, when the operator moves the control element from the first position to the second position thereof, the auto-splice apparatus initiates a first phase of a sequential automated splicing process, in which the tail end clamping device clamps the tail end of the first tow, extending from the fiber placement head, and the tail end trimming device trims the tail end of the first tow to a desired length to form a trimmed tail end of the first fiber tow.

The tail end clamping device, the tail end trimming device, the welding device, and the two position operator activated control element may also be operatively disposed and interconnected in such a manner that, following the first phase of the splicing process, the operator may feed the lead end of the second fiber tow into the auto-splice apparatus, with the auto-splice apparatus guiding the lead end into an overlapped position adjacent the trimmed tail end of the first fiber tow, to form overlapped portions of the first and second fiber tows.

The tail end clamping device, the tail end trimming device, the welding device, and the two-positioned operator activated control element may be further operatively disposed and interconnected in such a manner that, following insertion of the lead end of the second fiber tow into the auto-splice apparatus, the operator can move the control element back to the first position thereof, for initiating a second phase of the splicing process, by the auto-splice apparatus, in which the welding device of the auto-splice apparatus welds together the overlapped portions of the first and second fiber tows, and then unclamps the tail end clamping device, to release the tail end of the first fiber tow having the lead end of the second fiber tow welded thereto.

A welding device, in an auto-splice apparatus, according to the invention, may include a welding head and a support surface, with the welding head and support surface being configured in a complementary manner for clamping overlapped portions of the first and second fiber tows together between the welding head and the support surface with a clamping pressure. The welding head may also be configured for applying heat to the overlapped portions, for a period of time, to thereby weld the overlapped portions together. The welding head may be further configured for unclamping the overlapped portions of the first and second tows following completion of the weld. The welding device may also be configured for cooling the overlapped portions of the first and second fiber tows, subsequent to forming the weld. An auto-splice apparatus, according to the invention, may further include a welding controller, operatively connected for controlling one or more of: the clamping pressure; the heat applied by the welding head; the period of time that heat is applied by the welding head; and/or cooling of the overlapped portion, subsequent to forming the weld.

In an auto-splice apparatus and/or method, according to the invention, a back-up tow is attached to a distal end of an original tow, with a splice unit, in such a manner that it is not necessary to interrupt the fiber placement process to splice in a tow from a new spool of material when the original tow material on an original spool is consumed in the winding process. An apparatus and/or method, according to the invention may include attaching the back-up tow to the distal end of the original tow with a splice unit. Sensors, such as tow tension sensors or presence sensors, may be utilized for triggering and controlling the auto-splice process. An apparatus, according to the invention, may include elements such as guides, compression elements, and cooling equipment, in addition to heating and sensing elements.

An auto-splice apparatus and/or method, according to the invention, may be utilized for auto-splicing a single tow, multiple tows, or in a mass auto-splice mode which allows automatic changing of an entire creel of fiber tows, without rethreading tows through a fiber placement head.

Other aspects, objects and advantages of the invention will be apparent upon consideration of the following description of exemplary embodiments of the invention in conjunction with the accompanying drawings and attachments.

### BRIEF DESCRIPTION OF THE DRAWINGS

The accompanying drawings incorporated in and forming a part of the specification illustrate several aspects of the present invention and, together with the description, serve to explain the principles of the invention. In the drawings:

FIG. 1 is a schematic illustration showing installation of a first exemplary embodiment of an auto-splice apparatus, according to the invention, operatively installed for use with a fiber placement machine having a creel fixedly attached thereto, for assisting an operator in splicing the tail end of a first fiber tow to the lead end of a second fiber tow;

FIGS. 2-6 are schematic, enlarged illustrations of a portion of FIG. 1, showing construction details and a method of operation of the first exemplary embodiment of the auto-splice apparatus;

FIG. 7 is a schematic illustration showing the application of multiple auto-splice apparatuses, according to the invention, in a fiber placement machine having a creel fixedly attached thereto; and

FIGS. 8 and 9 illustrate a second exemplary embodiment of an auto-splice apparatus, according to the invention, in an application having multiple replaceable creels which are alternately attachable to a single fiber placement machine;

While the invention will be described in connection with certain preferred embodiments, there is no intent to limit it to those embodiments. On the contrary, the intent is to cover all alternatives, modifications and equivalents as included within the spirit and scope of the invention as defined by the appended claims.

### DETAILED DESCRIPTION OF THE INVENTION

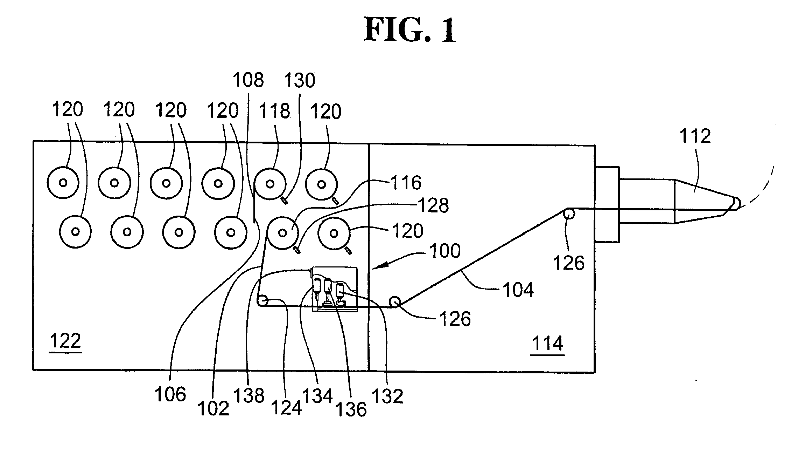

FIG. 1 is a schematic illustration of a first exemplary embodiment of an auto-splice apparatus, according to the invention, for assisting an operator in splicing the tail end 102 of a first fiber tow 104 to the lead end 106 of a second fiber tow 108. The first fiber tow 104 is fed from a first reel 116, containing a coiled portion of the first fiber tow 102, to a fiber placement head 112 of a fiber placement machine 114. The second fiber tow 108 is fed from a second reel 118, containing a coiled portion of the second fiber tow 108. The first and second reels 116, 118, together with a plurality of other reels 120, are operatively mounted within a creel 122, which is operatively and fixedly attached to the fiber placement machine 114, in the schematic illustration of the first exemplary embodiment of the invention 100, as shown in FIG. 1. The creel and the fiber placement machine include a plurality of other tensioning and redirecting devices, illustrated in FIG. 1 by re-direct rollers 124, 126, in the creel 122 and fiber placement head 114, respectively. The first exemplary embodiment of the invention 100, as shown in FIG. 1, also includes a first and second low material sensor 128, 130, operatively disposed and configured for detecting a low material condition of the first and second reels 116, 118, respectively.

The first exemplary embodiment of the auto-splice apparatus 100, includes a tail end clamping device 132, a tail end trimming device 134, a welding device 136, and a two-position, operator activated, control element, represented by a toggle switch 138 which operatively interconnects the tail and clamping device 132, the tail end trimming device 134, and the welding device 136.

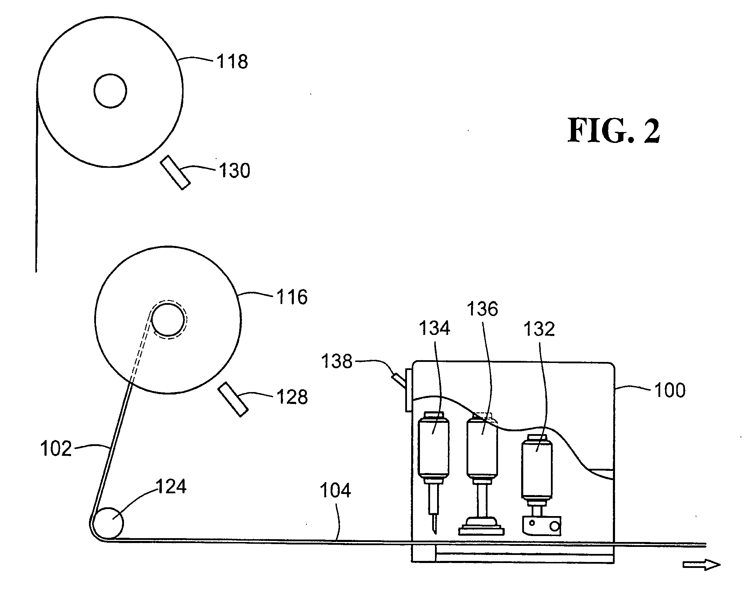

Operation of the first exemplary embodiment of the auto-splice apparatus 100, will be described in conjunction with FIGS. 2-6 which are enlarged illustrations of a portion of the elements illustrated in FIG. 1, sequentially showing various steps of a method, according to the invention, for operating the auto-splice apparatus 100.

FIG. 2 illustrates an operating condition in which the low material sensor 128 has detected a low material condition in the first reel 110, where the coiled portion of the first fiber tow 104, on the reel 116, is nearly exhausted, and the tail end 102 of the first fiber tow 104 is approaching the auto-splice apparatus 100, as the first fiber tow 104 is fed out to the fiber placement head 112.

When such a low material condition is detected, with regard to the first fiber tow 104, the operator of the fiber placement machine 114 stops the feed of the first fiber tow 104 to the fiber placement 114, prior to initiating a first phase of the splicing process.

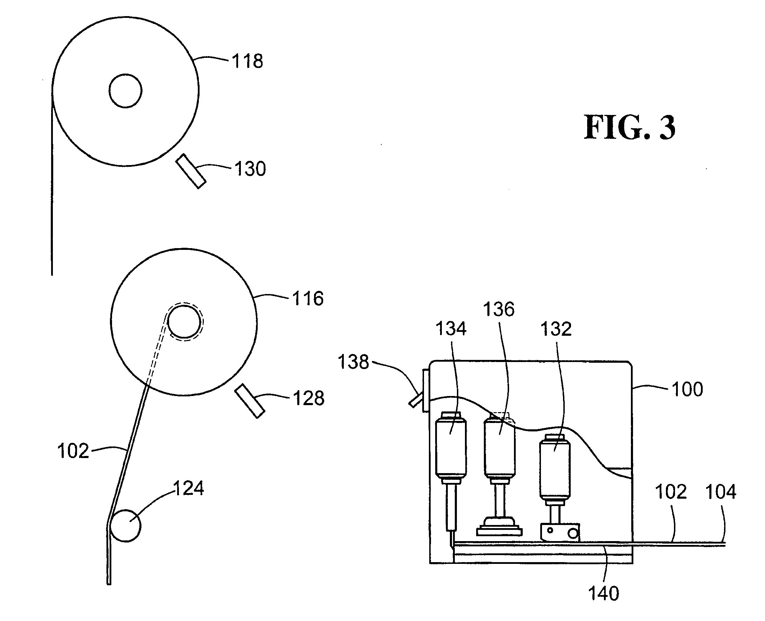

To initiate the first phase of the splicing process, the operator moves the toggle switch 138, from the first position as shown in FIG. 2, to the second position, as shown in FIG. 3. Once the toggle switch 138 is moved to the second position, by the operator, the auto-splice apparatus 100 performs the first phase of the splicing process, in which the tail end clamping device 138 clamps the tail end 102 of the first tow 104 (which extends through the fiber placement machine 114 and remains attached to the fiber placement head 112) in such a manner that the tail end clamping device 138 retains the tail end 102 within the auto-splice apparatus 100. The tail end trimming device 134, of the auto-splice apparatus 100, is then automatically actuated, as part of the first phase of the splicing process, to trim the tail end 102 of the first tow to a desired length, and then retract, to form a trimmed tail end 140 of the first fiber tow 104, to thereby complete the first phase of the splicing process. In some embodiments of the invention, the auto-splice apparatus 100 may be configured to provide a time delay between actuation of the tail end clamping device and actuation of the tail end trimming device, during the first phase of the splicing process.

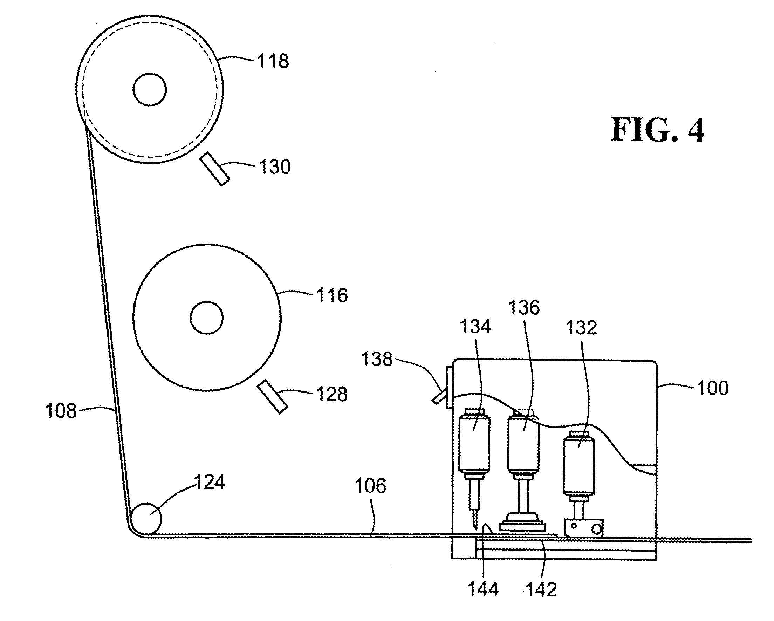

As shown in FIG. 4, following completion of the first phase of the splicing process, the operator inserts the lead end 106 of the second fiber tow 108 into the auto-splice apparatus 100, and the auto-splice apparatus 100 guides the lead end 106 into an overlapped position, adjacent the trimmed tail end 140 of the first fiber tow 104, to form overlapped portions 142, 144 of the first and second fiber tows 104, 108, respectively.

It will be noted, that according to the invention, so long as the toggle switch 138 is left in the second position by the operator, the auto-splice apparatus 100 will not perform the second phase of the splicing process, and will stay indefinitely at the end of the first phase of the splicing process, until the operator moves the toggle switch 138 from the second position to the first position thereof. The auto-splice apparatus 100 therefore provides however much time the operator may need to thread the lead end 106 of the second fiber tow 108 through any redirects 124, or tensioning devices may be present in the creel 122, and inserting the lead end 106 into the auto-splice apparatus 100.

It will be further noted, that although in the embodiment illustrated in the figures and disclosed thus far, the second fiber tow 108 is supplied by a second reel 118, which is already present within the creel 122, the invention may also be practiced by removing the first reel, after the tail end trimming device 134 severs the first fiber tow 104, and mounting a second reel 118, taken from storage outside of the creel, for example, on the drive mechanism upon which the first reel was mounted prior to becoming exhausted.

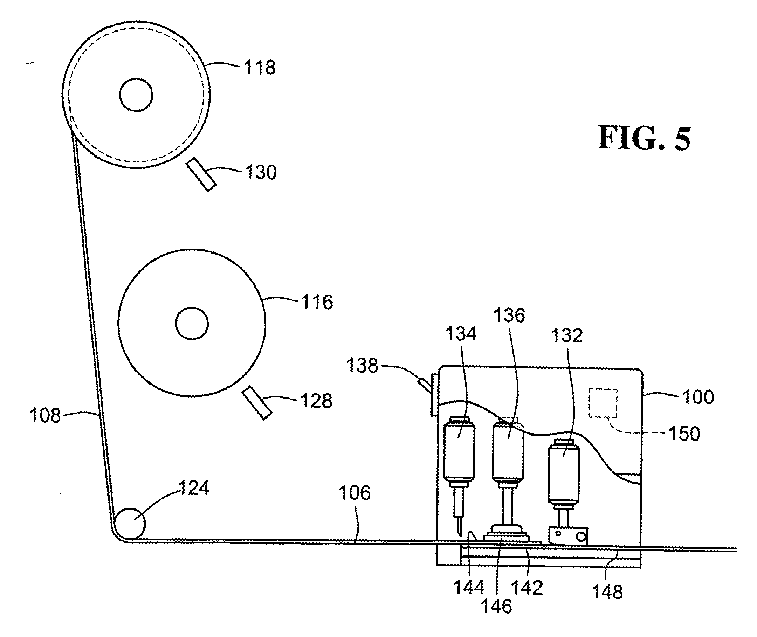

As shown in FIG. 5, once the operator has completed threading of the second fiber tow 108 through the redirects 124 and tensioning devices within the creel 122 and insertion of the lead end 106 of the second fiber tow 108 into the auto-splice apparatus 100, the operator moves the toggle switch 138 back to the first position, to initiate a second phase of the splicing process by the auto-splice apparatus 100, in which a welding head 146 of the welding device 136 clamps the overlapping portions 142, 144 of the first and second fiber tows 104, 108 against a support surface 148, of the auto-splice apparatus 100, with a clamping pressure. The welding head 146 then applies heat to the overlapped portions 142, 144, for a period of time, to thereby weld the overlapped portions 142, 144 together. After the welding head 146 has applied heat to the overlapped portions 142, 144, for a desired period of time, the auto-splice apparatus 100 moves the welding head 146 away from the support surface 148 to unclamp the welded together overlapped portions 142, 144 of the first and second tows 104, 108, to thereby complete the second phase of the splicing process.

In some forms of the invention, the welding device 136 may be further configured for cooling the overlapped portions 142, 146 of the first and second fiber tows 104, 108, subsequent to forming the weld, as part of the second phase of the splicing process.

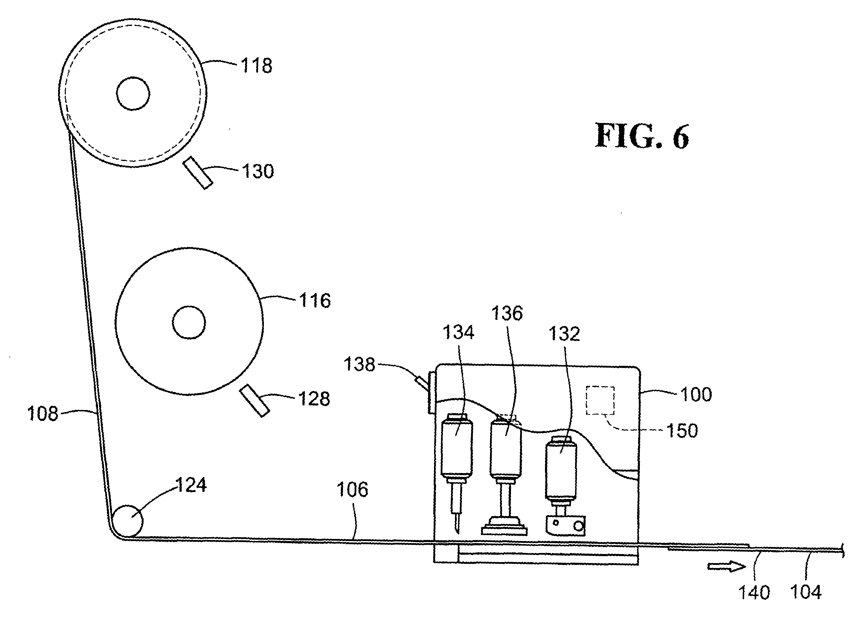

As shown in FIG. 5, the first exemplary embodiment of the auto-splice apparatus 100, according to the invention, also includes a welding controller 150, operatively connected for controlling one or more parameters of the welding process, such as the clamping pressure, the heat applied by the welding head, the period of time that the heat is applied, and/or the cooling of the overlapped portions 142, 144 of the first and second fiber tows 104, 108, subsequent to forming the weld. As indicated in FIG. 6, once the auto-splice apparatus 100 completes the second phase of the splicing process, the operator restarts the fiber placement machine 114, to feed the trimmed tail end 140 of the first fiber tow 104, which now has the lead end 106 of the second fiber tow welded thereto, to the fiber placement head 112.

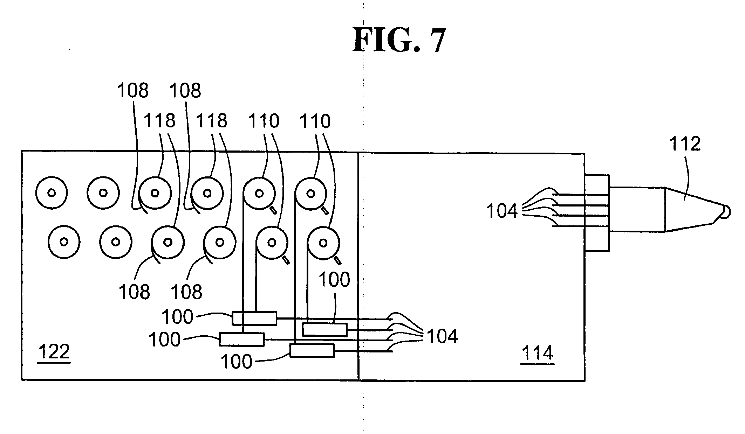

It will be understood, by those having skill in the art, that although the preceding discussion of the first exemplary embodiment of the invention has included only a single first reel 110 and a single second reel 118 supplying a single first fiber tow 104 and a single second fiber tow 108, the invention may also be practiced, in the manner schematically illustrated in FIG. 7, with multiple first tows 104 being supplied to a fiber placement head 112, and each of the first fiber tows 104 having associated therewith a separate auto-splice apparatus 100 for assisting an operator in splicing the tail ends of the first fiber tows 104 to the lead ends 106 of one of a plurality of second fiber tows 108 supplied by a plurality of second reels 118, with the splicing process being carried out by the operator with assistance of the auto-splice apparatus 100 according to the illustrations and description given above with reference to FIGS. 1-6.

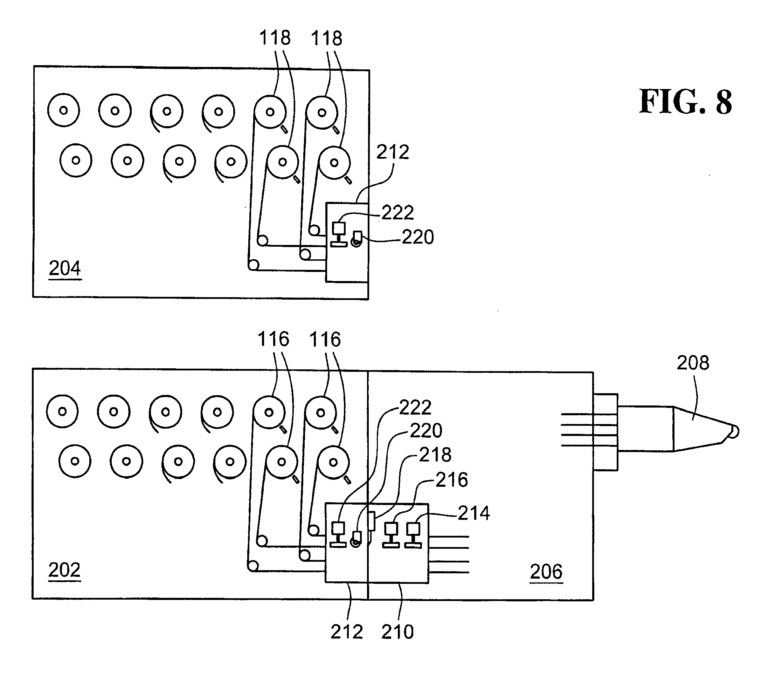

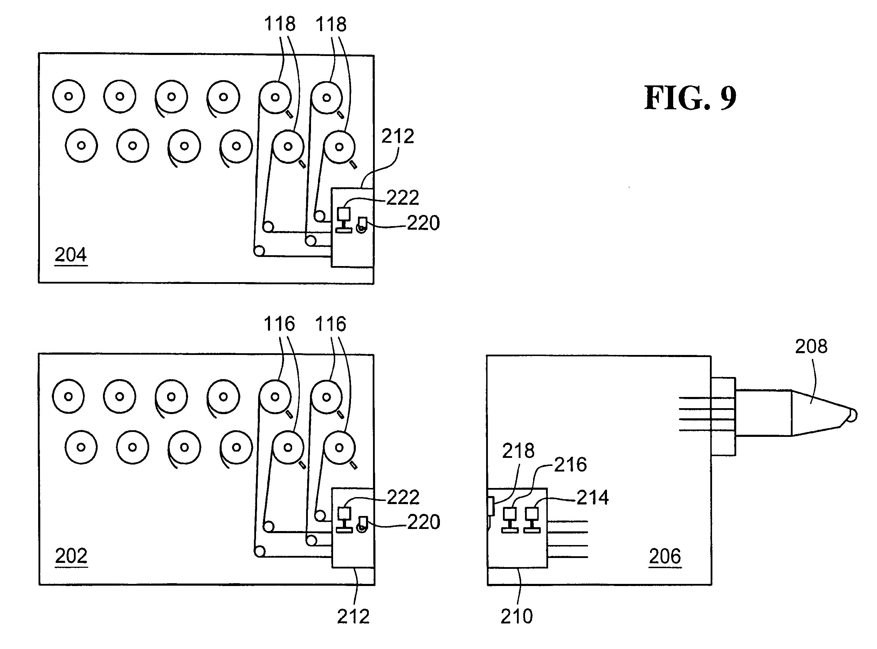

FIGS. 8 and 9 illustrate a second exemplary embodiment of an auto-splice apparatus 200 for use in an application where a plurality of first reels are operatively mounted in a first creel 202, and a plurality of second reels 118 are mounted in a second creel 204 with the first and second creels 202, 204 being configured for operative alternate attachment to a fiber placement machine 206, in a manner which allows all of the multiple fiber tows being fed to the fiber placement head 208 to be simultaneously and quickly changed by detaching the first creel 202 from the fiber placement machine 206, and operatively attaching the second creel 204 to the fiber placement machine 206, in place of the first creel 202. Operation of the fiber placement machine 206 may then be resumed, using second fiber tows from the second creel 204, and replenishment of the first creel 202 may take place off-line, while the fiber placement machine 206 is continuing the fiber placement process using the second tows from the second reels 118 and the second creel 204. When the second creel is exhausted, the process may be reversed by detaching the second creel 204 and reattaching the first creel 202, with the second creel then being replenished off-line. Alternatively, a series of creels may be sequentially attached to the fiber placement machine 206, during the fiber placement process, rather than merely alternating a first and a second creel 202, 204.

The ability to interchange creels, according to the invention, not only expedites the fiber placement process, by eliminating much of the dead time present in prior fiber placement processes utilizing creels fixedly attached to the fiber placement machine, but also allows the additional flexibility of effectively and efficiently changing the material in one or more of the multiple fiber tows at selected points in the fiber placement process, to allow some of the tows to be changed from one material, such as carbon fiber, to other materials such as fiberglass or Aramid fibers.

In order to facilitate the use of the interchange creels 202, 204, the second exemplary embodiment of the auto-splice apparatus 200 has a first half 210 thereof, fixedly attached to the fiber placement machine 206, for clamping and trimming the tail ends 102, of the first fiber tows 104, and for welding the overlapped portions of the first and second tows 104, 108, following attachments of one of the creels 202, 204 to the fiber placement machine 206.

The second exemplary embodiment of the auto-splice apparatus 200 has multiple second halves 212 thereof, with one of the multiple second halves 212 being disposed in the first creel 202 and another of the multiple second halves being disposed in the second creel 204. The second halves 212 are configured for clamping the respective lead ends of the first and second tows 104, 108 within the first and second creels 202, 204 respectively, when the first and second creels 202, 204 are not operatively connected to the fiber placement machine 206. The second halves 212 are further configured for feeding the lead ends of the first and second fiber tows 104, 108, respectively, into the first half 210 of the auto-splice apparatus 200, when the respective first or second creel 202, 204 is operatively attached to the fiber placement machine.

The first half 210 of the second exemplary embodiment of the auto-splice apparatus 200 includes a tail end clamping device 214, a welding device 216, and a tail end trimming device 218, operatively connected and disposed with respect to one another in a manner very similar to their respective counterparts 132, 136, 134, in the first exemplary embodiment of the auto-splice apparatus 100, described above. When a creel change is initiated, the tail end clamping device 214 clamps the tail ends of the first tows, extending outward to the fiber placement 208, in place within the fiber placement machine, and the tail end trimming device 218 is actuated to sever the first plys, so that the first creel 202 can be removed, and to simultaneously trim the tail ends of the first plys in a manner facilitating the splicing operation with the auto-splice apparatus 200.

When the second creel 204 is loaded, off-line, the lead ends of the second tows 108 are fed into the second half 212 of the auto-splice apparatus attached to the second creel 204. Specifically, the lead ends of the tows are fed beneath one or more feed rollers 220, of the second half 212 of the auto-splice apparatus 200, and are clamped in place by one or more lead end clamps 222 of the second half 212 of the auto-splice apparatus 200.

When one of the removable creels 202, 204 is attached to the fiber placement machine 206, alignment features, such as alignment pins received in tightly fitting bores, are utilized to accurately align the first and second halves 210, 212 of the auto-splice apparatus 200. After the creel (202 or 204) is securely attached to the fiber placement machine 206, the second phase of the splicing process is initiated, either by operator activation, or automatically by the auto-splice apparatus in response to signals from one or more sensors which indicates that the creel (202 or 204) is properly attached to the fiber placement machine 206. In the second embodiment of the auto-splice apparatus, the lead ends of the second fiber tows are fed into the first half 210 of the auto-splice apparatus by the feed rollers 220 in the second half 212 of the auto-splice apparatus 200 attached to the creel (202, 204) attached to the fiber placement machine 206. Specifically, when the second phase of the splicing process is activated, the lead end clamp 222, in the second half 212 of the auto-splice apparatus 200, unclamps the lead ends of the tows, and the feed roller 220 is simultaneously activated for feeding the tows into the first half 210 of the auto-splice apparatus, in an overlapped manner with the tail ends of the first fiber tows, which are then welded together by the welding device 216 of the first half 210 of the auto-splice apparatus 200. Once the second phase of the splicing process is completed, the fiber placement process is resumed.

With regard to practicing the invention with replaceable creels, it will be understood that the invention may be practiced in a wide variety of embodiments other than the second exemplary embodiment described above. For example, the auto-splice apparatus 200 may be configured in such a manner that the operator must initiate both a first and a second phase of the splicing process, using a two position control element, in much the same fashion as described above with relation to the first exemplary embodiment 100 of the invention. Alternatively, one or both phases of the splicing process may be automatically triggered by control elements within the auto-splice apparatus 200, the fiber placement machine 206, or the creels 202, 204. It is also noted, that the invention could be practiced without the second halves 212 of the auto-splice apparatus 200, or without one or more of the components of the second halves 212, in a manner requiring manual feeding of the tail ends of the second tows into the first half 210 of the second exemplary embodiment of the auto-splice apparatus 200. Some embodiments of a second half 212 of an auto-splice apparatus 200, according to the invention, may also include additional components, such as a lead end trimming device, for trimming the lead ends to a desired length and configuration. It is also noted, that where multiple fiber tows are involved, one or more of the active components 214, 216, 218, 220, 222 of the first and second halves 210, 212 of the second exemplary embodiment of the auto-splice apparatus 200 may be configured in some embodiments of the invention, as individual multiple components acting on a single one of the multiple tows, or alternatively, configured for simultaneously acting on multiple ones of the multiple fiber tows.

The use of the terms "a" and "an" and "the" and similar referents in the context of describing the invention (especially in the context of the following claims) is to be construed to cover both the singular and the plural, unless otherwise indicated herein or clearly contradicted by context. The terms "comprising," "having," "including," and "containing" are to be construed as open-ended terms (i.e., meaning "including, but not limited to,") unless otherwise noted. Recitation of ranges of values herein are merely intended to serve as a shorthand method of referring individually to each separate value falling within the range, unless otherwise indicated herein, and each separate value is incorporated into the specification as if it were individually recited herein. All methods described herein can be performed in any suitable order unless otherwise indicated herein or otherwise clearly contradicted by context. The use of any and all examples, or exemplary language (e.g., "such as") provided herein, is intended merely to better illuminate the invention and does not pose a limitation on the scope of the invention unless otherwise claimed. No language in the specification should be construed as indicating any non-claimed element as essential to the practice of the invention.

## Claims

1. A method for assisting an operator in splicing the tail end of a first fiber tow to the lead end of a second fiber tow, wherein the first fiber tow is being fed from a first reel of the first fiber tow to a fiber placement head of a fiber placement machine, and the second fiber tow is being fed from a second reel of the second fiber tow, the method comprising, performing the splicing operation with an auto-splice apparatus having an operator actuated welding device for clamping together and applying heat to overlapped portions of the tail end of the first fiber tow and the lead end of the second fiber tow.

2. The method of claim 1, further comprising:
the operator initiating a first phase of the splicing process, performed by an auto-splice apparatus, in which the auto-splice apparatus sequentially clamps the tail end of the first tow extending from the fiber placement head, and trims the tail end of the first tow to a desired length to form a trimmed tail end of the first fiber tow;
the operator feeding the lead end of the second tow into the auto-splice apparatus, with the auto-splice apparatus guiding the lead end into an overlapped position adjacent the trimmed tail end of the first fiber tow to form overlapped portions of the first and second fiber tows; and
the operator initiating a second phase of the splicing process, performed by the auto-splice apparatus, in which the auto-splice apparatus welds together the overlapped portions of the first and second fiber tows, and then unclamps the tail end of the first fiber tow.

3. The method of claim 2, further comprising:
detecting a low material condition in the first reel of the first fiber tow;
stopping the feed of the first fiber tow to the fiber placement head prior to initiating the first phase of the splicing process; and
re-starting the feed of the trimmed tail end of the first fiber tow, having the second fiber tow welded thereto, to the fiber placement head, following completion of the second phase of the splicing process.

4. The method of claim 3, wherein the first reel is operatively mounted within a creel operatively attached to the fiber placement head, and the method further comprises, the operator replacing the first reel with the second reel, by removing the first reel and operatively mounting the second reel within the creel in place of the first reel, between the first and second phases of the splicing process.

5. The method of claim 3, wherein, the first and second reels are separately operatively mounted within a creel operatively attached to the fiber placement head, with only the first reel being operatively connected to the fiber placement head prior to initiating the splicing process, and the method further comprises, the operator feeding the lead end of the second fiber tow into the auto-splice apparatus, between the first and second phases of the splicing process.

6. The method of claim 2, wherein, welding the overlapped portions of the first and second fiber tows comprises:
clamping the overlapped portions of the first and second fiber tows together between a welding head and a support surface with a clamping pressure;
applying heat to the overlapped portions with the welding head, for a period of time, to thereby weld the overlapped portions together;and
unclamping the overlapped portions following completion of weld.

7. The method of claim 6, further comprising, controlling one or more of the clamping pressure, the heat applied by the welding head, and the period of time, to a desired value thereof.

8. The method of claim 6, wherein, welding the overlapped portions of the first and second fiber tows further comprises, cooling the overlapped portions subsequent to forming the weld.

9. The method of claim 2, wherein, the first reel is operatively mounted in a first creel, and the second reel is operatively mounted in a second creel, with the first and second creel being configured for operative alternate attachment to the fiber placement machine, and the method further comprises, detaching the first creel from the fiber placement machine, and operatively attaching the second creel to the fiber placement machine in place of the first creel.

10. The method of claim 9, further comprising, operating the fiber placement machine with a second fiber tow from the second creel, while the first creel is detached

11. The method of claim 9, wherein:
the auto-splice apparatus has a first half thereof, fixedly attached to the fiber placement machine for clamping and trimming the tail end of the first tow, and for welding the overlapped portions of the first and second tows;
the auto-splice apparatus has multiple second halves thereof, with one of the multiple second halves being fixedly attached to the first creel and another of the multiple second halves being fixedly attached to the second creel;
the second halves being configured for clamping the respective lead ends of the first and second tows within the first and second creels respectively, when the first and second creels are not operatively connected to the fiber placement machine;
the second halves being further configured for feeding the lead ends of the first and second fiber tows, respectively, into the first half of the auto-splice apparatus, when the respective first or second creel is operatively attached to the fiber placement machine; and
the method further comprises, clamping the respective lead ends of the first and second tows within the first and second creels respectively, when the first and second creels are not operatively connected to the fiber placement machine.

12. The method of claim 11, further comprising, feeding the lead ends of the first and second fiber tows, respectively, into the first half of the auto-splice apparatus, when the respective first or second creel is operatively attached to the fiber placement machine, and the second phase of the auto-splice process is initiated.

13. The method of claim 11, wherein, the fiber placement head is receiving multiple first tows from multiple first reels of the first creel, the second creel includes multiple second reels for feeding multiple second fiber tows to the fiber placement head, and the first phase of the splicing process of the method further comprises, simultaneously clamping and trimming all of the first fiber tows, prior to detachment of the first creel from the fiber placement machine.

14. The method of claim 11, further comprising, operating the fiber placement machine with the multiple second fiber tows from the second creel, while the first creel is detached.

15. The method of claim 14, further comprising, replenishing the first creel with different first reels of first fiber tows, while the first creel is detached from the fiber placement machine.

16. An auto-splice apparatus, for assisting an operator in splicing the tail end of a first fiber tow to the lead end of a second fiber tow, wherein the first fiber tow is being fed from a first reel of the first fiber tow to a fiber placement head of a fiber placement machine, and the second fiber tow is being fed from a second reel of the second fiber tow, the auto-splice apparatus comprising, an operator actuated welding device for clamping together and applying heat to overlapped portions of the tail end of the first fiber tow and the lead end of the second fiber tow.

17. The apparatus of claim 16, further comprising:
a tail end clamping device, a tail end trimming device, a welding device, and a two-position operator activated control element operatively connecting the tail end clamping device, the tail end trimming device, and the welding device;
the tail end clamping device, the tail end trimming device, the welding device, and the two-position operator activated control element being operatively disposed and interconnected in such a manner that when the operator moves the control element from the first position to the second position thereof, the auto-splice apparatus initiates a first phase of a sequential automated splicing process, in which the tail end clamping device clamps the tail end of the of the first tow extending from the fiber placement head, and then the tail end trimming device trims the tail end of the first tow to a desired length to form a trimmed tail end of the first fiber tow;
the tail end clamping device, the tail end trimming device, the welding device, and the two-position operator activated control element being also operatively disposed and interconnected in such a manner that, following the first phase of the splicing process, the operator may insert the lead end of the second tow into the auto-splice apparatus, with the auto-splice apparatus guiding the lead end into an overlapped position adjacent the trimmed tail end of the first fiber tow to form overlapped portions of the first and second fiber tows; and
the tail end clamping device, the tail end trimming device, the welding device, and the two-position operator activated control element further operatively disposed and interconnected in such a manner that, following insertion of the lead end of the second fiber tow into the auto-splice apparatus, the operator can move the control element back to the first position thereof, for initiating a second phase of the splicing process by the auto-splice apparatus, in which the welding device of the auto-splice apparatus welds together the overlapped portions of the first and second fiber tows, and then unclamps the tail end clamping device to release the tail end of the first fiber tow having the lead end of the second fiber tow welded thereto.

18. The apparatus of claim 17, further comprising, a low material detector operatively connected to the first reel of fiber tow, for detecting a low material condition in the first reel of the first fiber tow, and reporting the low material condition, so that feeding of the first fiber tow to the fiber placement head may be stopped, prior to initiating the first phase of the splicing process, while the tail end of the first fiber tow is still disposed within the auto-splice apparatus.

19. The apparatus of claim 17, wherein the first reel is operatively mounted within a creel operatively attached to the fiber placement head, and the control element is configured for indefinitely holding the tail end of the first fiber tow in the clamped and trimmed condition, until the operator moves the control element back to the first position thereof, to thereby allow the operator such time as is needed to perform one or more of the following activities:
replacing the first reel with the second reel, by removing the first reel and operatively mounting the second reel within the creel in place of the first reel, between the first and second phases of the splicing process; or
where the first and second reels are separately operatively mounted within a creel operatively attached to the fiber placement head, with only the first reel being operatively connected to the fiber placement head prior to initiating the splicing process, the operator feeding the lead end of the second fiber tow into the auto-splice apparatus, between the first and second phases of the splicing process.

20. The apparatus of claim 17, wherein, the welding device includes a welding head and a support surface:
the welding head and support surface being configured in a complementary manner for clamping the overlapped portions of the first and second fiber tows together, between the welding head and the support surface, with a clamping pressure;
the welding head also being configured for applying heat to the overlapped portions, for a period of time, to thereby weld the overlapped portions together, and
the welding head being further configured for unclamping the overlapped portions of the first and second tows following completion of weld.

21. The apparatus of claim 20, further comprising a welding controller, operatively connected for controlling one or more of the clamping pressure, the heat applied by the welding head, and the period of time, to a desired value thereof.

22. The apparatus of claim 20, wherein the welding device is further configured for cooling the overlapped portions of the first and second fiber tows subsequent to forming the weld.

23. The apparatus of claim 17, wherein, the first reel is operatively mounted in a first creel, and the second reel is operatively mounted in a second creel, with the first and second creel being configured for operative alternate attachment to the fiber placement machine.

24. The apparatus of claim 23, wherein, the fiber placement machine is operable with the second fiber tow being supplied by from the second creel, while the first creel is detached.

25. The apparatus of claim 23, wherein:
the auto-splice apparatus has a first half thereof, fixedly attached to the fiber placement machine for clamping and trimming the tail end of the first tow, and for welding the overlapped portions of the first and second tows;
the auto-splice apparatus has multiple second halves thereof, with one of the multiple second halves being fixedly attached to the first creel and another of the multiple second halves being fixedly attached to the second creel;
the second halves being configured for clamping the respective lead ends of the first and second tows within the first and second creels respectively, when the first and second creels are not operatively connected to the fiber placement machine;
the second halves being further configured for feeding the lead ends of the first and second fiber tows, respectively, into the first half of the auto-splice apparatus, when the respective first or second creel is operatively attached to the fiber placement machine; and
with the apparatus being configured for clamping the respective lead ends of the first and second tows within the first and second creels respectively, when the first and second creels are not operatively connected to the fiber placement machine.

26. The apparatus of claim 25, wherein, the first half of the auto-splice apparatus includes a feed roller, operatively configured and connected for feeding the lead ends of the first and second fiber tows, respectively, into the second half of the auto-splice apparatus, when the respective first or second creel is operatively attached to the fiber placement machine, and the second phase of the splicing process is initiated.

27. The apparatus of claim 25, wherein, the fiber placement head is receiving multiple first tows from multiple first reels of the first creel, the second creel includes multiple second reels for feeding multiple second fiber tows to the fiber placement machine, and the first half of the auto-splice apparatus is configured for simultaneously clamping and trimming all of the first fiber tows, when the first phase of the splicing process is initiated, prior to detachment of the first creel from the fiber placement machine.

28. The apparatus of claim 25, wherein, the auto-splice apparatus and second creel are configured for operating the fiber placement machine with the multiple second fiber tows from the second creel, while the first creel is detached.

29. The apparatus of claim 25, wherein, the auto-splice apparatus and first creel are configured such that the first creel may be replenished with different first reels of first fiber tows, while the first creel is detached from the fiber placement machine.

## Patentansprüche

1. Verfahren, um einen Bediener beim Spleißen des Schwanzendes eines ersten Faserstranges mit dem Kopfende eines zweiten Faserstranges zu assistieren, wobei der erste Faserstrang von einer ersten Haspel des ersten Faserstranges einem Faserauflegekopf einer Faserauflegemaschine zugeführt wird, und der zweite Faserstrang von einer zweiten Haspel des zweiten Faserstranges, umfassend das Spleißen mittels einer automatischen Spleißvorrichtung, die über eine vom Bediener aktivierte Schweißvorrichtung verfügt, um überlappende Abschnitte des Schwanzendes des ersten Faserstranges und des Kopfendes des zweiten Faserstranges zusammen zu klemmen und mit Wärme zu beaufschlagen.

2. Verfahren nach Anspruch 1 weiters umfassend,
dass der Bediener eine erste Phase des Spleißprozesses, die durch eine automatische Spleißvorrichtung erfolgt, in der die automatische Spleißvorrichtung sequentiell das Schwanzende des ersten Stranges, das sich über den Faserauflegekopf erstreckt, festklemmt und das Schwanzende des ersten Stranges auf eine gewünschte Länge trimmt, um ein getrimmtes Schwanzende des ersten Faserstranges zu erhalten;
dass der Bediener das Kopfende des zweiten Stranges in die automatische Spleißvorrichtung führt, wobei die automatische Spleißvorrichtung das Kopfende, benachbart dem getrimmten Schwanzende des ersten Faserstranges in eine überlappende Lage bringt, um überlappende Teile des ersten und des zweiten Faserstranges zu bilden; und
dass der Bediener eine zweite Phase des Spleißprozesses initiiert, die durch die automatische Spleißvorrichtung erfolgt, worin die automatische Spleißvorrichtung die überlappenden Teile des ersten und des zweiten Faserstrangs zusammenschweißt und dann das Schwanzende des ersten Faserstranges freigibt.

3. Verfahren nach Anspruch 2 weiters umfassend,
Feststellen des Ausgehens des Materials auf der ersten Haspel des ersten Faserstranges;
Stoppen der Zufuhr des ersten Faserstranges zum Faserauflegekopf vor dem Starten der ersten Phase des Spleißverfahrens; und
erneutes Starten der Zufuhr des getrimmten Schwanzendes des ersten Faserstranges, der den zweiten Faserstrang angeschweißt hat, zum Faserauflegekopf, gefolgt von der Vervollständigung der zweiten Phase des Spleißverfahrens.

4. Verfahren nach Anspruch 3, bei dem die erste Haspel operativ in einem Spulengestell befestigt ist, das operativ mit dem Faserauflegekopf verbunden ist, wobei das Verfahren weiters umfasst, dass der Bediener die erste Haspel durch die zweite Haspel ersetzt, die erste Haspel entfernt und die zweite Haspel anstelle der ersten Haspel operativ in den Spulenständer anbringt und dies zwischen der ersten und der zweiten Phase des Spleißvorganges.

5. Verfahren nach Anspruch 3, worin die erste und die zweite Haspel voneinander getrennt operativ in einem Spulenständer montiert sind, der operativ mit dem Faserauflegekopf verbunden ist, wobei vor dem Beginn des Spleißvorganges nur die erste Haspel operativ mit dem Faserauflegekopf verbunden ist und das Verfahren weiters umfasst, dass der Bediener das Kopfende des zweiten Faserstranges zwischen der ersten und der zweiten Phase des Spleißvorganges in die automatische Spleißvorrichtung einführt.

6. Verfahren nach Anspruch 2, worin das Schweißen der überlappenden Abschnitte des ersten und des zweiten Faserstranges umfasst,
das gemeinsame Festklemmen der überlappenden Abschnitte des ersten und des zweiten Faserstrangs zwischen einem Schweißkopf und einer Stützoberfläche mit klemmendem Druck;
das Aufbringen von Wärme auf die überlappenden Abschnitte mit dem Schweißkopf für ein Zeitintervall, wodurch die überlappenden Abschnitte zusammengeschweißt werden; und
das Freigeben der überlappenden Abschnitte anschließend an die Vervollständigung des Schweißens.

7. Verfahren nach Anspruch 6, weiters umfassend die Regelung zumindest einer der Größen des Klemmdruckes, der durch den Schweißkopf aufgebrachten Wärme und des Zeitintervalls auf einen gewünschten Wert.

8. Verfahren nach Anspruch 6, worin das Schweißen der überlappenden Abschnitte des ersten und zweiten Faserstrangs weiters das Abkühlen der überlappenden Abschnitte anschließend an die Bildung der Verschweißung umfasst.

9. Verfahren nach Anspruch 2, worin die erste Haspel operativ in einem ersten Spulenständer montiert ist und die zweite Haspel operativ in einem zweiten Spulenständer montiert ist, wobei der erste und der zweite Spulenständer so ausgebildet sind, dass sie alternativ mit der Faserauflegvorrichtung zusammen wirken können und das Verfahren weiters das Abkoppeln des ersten Spulenständers von der Faserauflegevorrichtung und das operative Verbinden des zweiten Spulenständers mit der Faserauflegevorrichtung anstelle des ersten Spulenständers umfasst.

10. Verfahren nach Anspruch 9, weiters umfassend den Betrieb der Faserauflegevorrichtung mit einem zweiten Faserstrang vom zweiten Spulenständer während der erste Spulenständer abgehängt ist.

11. Verfahren nach Anspruch 9, worin,
die automatische Spleißvorrichtung eine erste Hälfte aufweist, die fest mit der Faserauflegmaschine zum Klemmen und Trimmen des Schwanzendes des ersten Stranges verbunden ist, um die überlappenden Abschnitte des ersten und des zweiten Stranges zu verschweißen;
die Autospleißvorrichtung mehrere zweite Hälften aufweist, wobei eines der mehreren zweiten Hälften fest mit dem ersten Spulenständer und ein anderes der mehreren zweiten Hälften fest mit dem zweiten Spulenständer verbunden ist;
die zweiten Hälften so ausgebildet sind, dass sie die entsprechenden Kopfenden der ersten und zweiten Stränge innerhalb der ersten bzw. zweiten Spulenständer ersten bzw. zweiten Spulenständer festklemmen wenn der erste bzw. zweite Spulenständer nicht operativ mit der Faserauflegevorrichtung verbunden ist;
die zweiten Hälften ferner so ausgebildet sind, dass sie die Kopfenden der ersten bzw. zweiten Faserstränge in die erste Hälfte der automatische Spleißvorrichtung einlegen, wenn der erste bzw. zweite Spulenständer operativ mit der Faserauflegevorrichtung verbunden ist; und
das Verfahren weiters umfasst, dass die entsprechenden Kopfenden des ersten bzw. zweiten Stranges im ersten bzw. zweiten Spulenständer festgeklemmt werden, wenn der erste bzw. zweite Spulenständer nicht operativ mit der Faserauflegevorrichtung verbunden ist.

12. Verfahren nach Anspruch 11, weiters umfassend das Zuführen der Kopfenden des ersten bzw. zweiten Faserstrangs in die erste Hälfte der automatischen Spleißvorrichtung wenn der entsprechende erste oder zweite Spulenständer operativ mit der Faserauflegevorrichtung verbunden ist und die zweite Phase des automatischen Spleißverfahrens durchgeführt wird.

13. Verfahren nach Anspruch 11, worin der Faserauflegekopf eine Vielzahl von ersten Strängen einer Vielzahl von Haspeln des ersten Spulenständers erhält und der zweite Spulenständer eine Vielzahl von Haspeln zur Zufuhr einer Vielzahl von zweiten Fasersträngen zum Faserauflegekopf aufweist, und die erste Phase des Spleißverfahrens weiters das simultane Klemmen und Trimmen aller ersten Faserstränge vor dem Abhängen des ersten Spulenständers von der Faserauflegevorrichtung umfasst.

14. Verfahren nach Anspruch 11, weiters umfassend den Betrieb der Faserauflegevorrichtung mit einer Vielzahl von zweiten Fasersträngen vom zweiten Spulenständer während der erste Spulenständer abgehängt ist.

15. Verfahren nach Anspruch 14, weiters umfassend das Auffüllen des ersten Spulenständers mit verschiedenen ersten Haspeln von ersten Fasersträngen während der erste Spulenständer von der Faserauflegevorrichtung abgehängt ist.

16. Eine automatische Spleißvorrichtung, um einem Bediener beim Spleißen des Schwanzendes eines ersten Faserstranges mit dem Kopfende eines zweiten Faserstranges zu assistieren, worin der erste Faserstrang von einer ersten Haspel für den ersten Faserstrang zu einem Faserauflegekopf einer Faserauflegevorrichtung geführt wird und der zweite Faserstrang von einer zweiten Haspel für den zweiten Faserstrang zugeführt wird, wobei die automatische Spleißvorrichtung eine vom Bediener aktivierbare Schweißvorrichtung für das Zusammenklemmen und das Aufbringen von Wärme zu den überlappenden Abschnitten des Schwanzendes des ersten Faserstranges und des Kopfendes des zweiten Faserstranges umfasst.

17. Die Vorrichtung nach Anspruch 16, weiters umfassend:
eine Klemmvorrichtung für die Schwanzenden, eine Trimmvorrichtung für die Schwanzenden, eine Schweißvorrichtung und ein vom Bediener steuerbares, zwei Positionen einnehmen könnendes Steuerelement, das operativ mit der Klemmvorrichtung für die Schwanzenden, der Trimmvorrichtung für die Schwanzenden und der Schweißvorrichtung verbunden ist;
wobei die Klemmvorrichtung für die Schwanzenden, die Trimmvorrichtung für die Schwanzenden, die Schweißvorrichtung und das vom Bediener aktivierbare, zwei Positionen einnehmen könnende Steuerelement zueinander so operativ angeordnet und so miteinander verbunden sind, dass, wenn der Bediener das Steuerelement von der ersten Position in die zweite Position bringt, die automatische Spleißvorrichtung die erste Phase eines sequentiellen automatischen Spleißvorganges startet, in der die Klemmvorrichtung für das Schwanzende das Schwanzende des ersten Stranges, das sich über den Faserauflegekopf erstreckt, festklemmt und dass dann die Trimmvorrichtung für das Schwanzende das Schwanzende des ersten Stranges auf eine gewünschte Länge trimmt um ein getrimmtes Schwanzende des ersten Faserstranges zu bilden;
wobei weiters die Klemmvorrichtung für die Schwanzenden, die Trimmvorrichtung für die Schwanzenden, die Schweißvorrichtung und das vom Bediener aktivierbare, zwei Positionen einnehmen könnende Steuerelement zueinander so operativ angeordnet und so miteinander verbunden sind, dass, anschließend an die erste Phase des Spleißvorganges kann der Bediener das Kopfende des zweiten Stranges in die automatische Spleißvorrichtung einlegen, wobei die automatische Spleißvorrichtung das Kopfende in eine überlappende Lage benachbart dem getrimmten Schwanzende des ersten Faserstranges führt, um überlappende Abschnitte des ersten und des zweiten Faserstrangs zu bilden;
wobei weiters die Klemmvorrichtung für die Schwanzenden, die Trimmvorrichtung für die Schwanzenden, die Schweißvorrichtung und das vom Bediener aktivierbare, zwei Positionen einnehmen könnende Steuerelement zueinander so operativ angeordnet und so miteinander verbunden sind, dass, folgend auf die Einbringung des Kopfendes des zweiten Faserstranges in die automatische Spleißvorrichtung der Bediener das Kontrollelement zurück in seine erste Position bringen kann, um eine zweite Phase des Spleißvorganges durch die automatische Spleißvorrichtung zu beginnen in der die Schweißvorrichtung der automatischen Schweißvorrichtung die überlappenden Abschnitte der ersten und der zweiten Faserstränge zusammenschweißt und dann die Klemmvorrichtung für das Schwanzende löst um das Schwanzende des ersten Fasterstranges, das das Kopfende des zweiten Faserstranges daran geschweißt hat, freizugeben.

18. Die Vorrichtung nach Anspruch 17, weiters umfassend einen Materialenddetektor, der operativ mit der ersten Haspel des Fasterstranges verbunden ist, um das Ende des Materials auf der ersten Haspel des ersten Faserstranges zu erkennen und um diesen Endzustand zu rapportieren, sodass die Zufuhr des ersten Faserstranges zum Faserauflegekopf gestoppt werden kann, bevor mit der ersten Phase des Spleißvorganges begonnen wird, während das Schwanzende des ersten Faserstranges nach wie vor innerhalb der automatischen Spleißvorrichtung vorliegt.

19. Die Vorrichtung nach Anspruch 17, worin die erste Haspel operativ innerhalb eines Spulenständers montiert ist, der operativ mit dem Faserauflegekopf verbunden ist und das Kontrollelement so ausgebildet ist, dass es das Schwanzende des ersten Faserstranges unbegrenzt im geklemmten und getrimmten Zustand hält, bis der Bediener das Kontrollelement zurück in seine erste Position bringt, um so den Bediener die Zeit zu geben, die er benötigt, um eine oder mehrere der folgenden Tätigkeiten zu vollführen:
Ersetzen der ersten Haspel durch die zweite Haspel indem die erste Haspel entfernt und die zweite Haspel operativ anstelle der ersten Haspel im Spulenständer zwischen der ersten und der zweiten Fase des Spleißvorganges montiert wird oder
Wenn die ersten die ersten und zweiten Haspeln voneinander getrennt operativ auf einem Spulenständer befestigt sind, der operativ mit dem Faserauflegekopf verbunden ist, wobei nur die erste Haspel operativ mit dem Faserauflegekopf verbunden ist, bevor der Spleißvorgang gestartet wird, das führende Ende des zweiten Faserstranges in die automatische Spleißvorrichtung, zwischen der ersten und der weiten Fase des Spleißvorganges führen.

20. Vorrichtung nach Anspruch 17, worin die Schweißvorrichtung einen Schweißkopf und eine Anpressoberfläche aufweist;
Wobei der Schweißkopf und die Anpressoberfläche auf komplementäre Weise ausgebildet sind, um die überlappendend Abschnitte der ersten und der zweiten Faserstränge zwischen dem Schweißkopf und der Anpressoberfläche mit einer Klemmpressung zusammenzupressen;
Wobei der Schweißkopf auch so ausgebildet ist, dass er Wärme auf die überlappenden Abschnitte für ein Zeitintervall aufbringen kann, um so die überlappenden Abschnitte zusammenschweißen zu können, und
Wobei der Schweißkopf weiters so ausgebildet ist, dass er, folgend auf die Vervollständigung des Schweißens, die überlappenden Abschnitte des ersten und des zweiten Stranges freigibt.

21. Vorrichtung nach Anspruch 20, weiters aufweisend eine Schweißregeleinrichtung, die operativ mit ihr verbunden ist, um entweder den Klemmdruck, und/oder die vom Klemmkopf aufgebrachte Wärme und/oder das Zeitintervall auf einem gewünschten Wert einstellen zu können.

22. Vorrichtung nach Anspruch 20, worin die Schweißvorrichtung weiters so ausgebildet ist, dass sie die überlappenden Abschnitte der ersten und zweiten Faserstränge anschließend an die Bildung der Schweißstelle kühlt.

23. Vorrichtung nach Anspruch 17, worin die erste Haspel operativ in einem ersten Spulenständer montiert ist und die zweite Haspel, operativ in einem zweiten Spulenständer, wobei der erste und der zweite Spulenständer so ausgebildet sind, dass sie alternativ mit der Faserauflegevorrichtung zusammen arbeiten können.

24. Vorrichtung nach Anspruch 23, worin die Faserauflegevorrichtung mit dem zweiten Faserstrang, der vom zweiten Spulenständer zugeführt wird, arbeitet, während der erste Spulenständer abgehängt ist.

25. Die Vorrichtung nach Anspruch 23, worin,
die automatische Spleißvorrichtung eine erste Hälfte aufweist, die fest mit der Faserauflegevorrichtung verbunden ist, um das Schwanzende des ersten Schwanzes zu klemmen und zu trimmen und um die überlappenden Abschnitte des ersten und des zweiten Stranges zu verschweißen;
die automatische Spleißvorrichtung mehrere zweite Hälften aufweist, wobei eine der mehreren zweiten Hälften fest mit dem ersten Spulenständer verbunden ist und eine andere der mehreren zweiten Hälften fest mit dem zweiten Spulenständer verbunden ist;
wobei die zweiten Hälften so ausgebildet sind, dass sie die jeweiligen Kopfenden der ersten und zweiten Stränge innerhalb der ersten bzw. zweiten Spulenständer festklemmen können, wenn der erste bzw. zweite Spulenständer nichtoperativ mit der Faserauflegevorrichtung verbunden ist;
wobei die zweiten Hälften weiter so ausgebildet sind, dass sie die Kopfenden des ersten bzw. zweiten Faserstranges in die erste Hälfte der automatischen Spleißvorrichtung einbringen, wenn der erste bzw. zweite Spulenträger operativ mit der Faserauflegevorrichtung verbunden ist;
wobei die Vorrichtung so ausgebildet ist, dass sie die entsprechenden Kopfenden des ersten bzw. zweiten Stranges vom ersten bzw. zweiten Spulenträger festklemmt, wenn der erste bzw. zweite Spulenträger nicht operativ nicht mit der Faserauflegevorrichtung verbunden ist.

26. Vorrichtung nach Anspruch 25, worin die erste Hälfte der automatischen Spleißvorrichtung einen Zufuhrroller umfasst, der so ausgebildet und angeordnet ist, dass er die Kopfenden der ersten bzw. zweiten Faserstränge in die zweite Hälfte der automatischen Spleißvorrichtung einbringt, wenn der erste bzw. zweite Spulenständer operativ mit der Faserauflegevorrichtung verbunden ist und die zweite Fase des Spleißverfahren initiiert ist.

27. Vorrichtung nach Anspruch 25, worin der Faserauflegekopf mehrere erste Stränge von mehreren ersten Haspeln des ersten Spulenträgers erhält und der zweite Spulenträger mehrere zweite Haspeln für die Zufuhr mehrerer zweiter Faserstränge zur Faserauflegevorrichtung aufweist und die erste Hälfte der automatischen Spleißvorrichtung so ausgebildet ist, dass sie simultan alle ersten Faserstränge festklemmt und trimmt, wenn die erste Phase des Spleißvorganges aktiviert ist, bevor der erste Spulenträger von der Faserauflegevorrichtung abgehängt wird.

28. Vorrichtung nach Anspruch 25, worin die automatische Spleißvorrichtung und der zweite Spulenträger so ausgebildet sind, dass die Faserauflegevorrichtung mit einer Mehrzahl vom zweiten Fasersträngen vom zweiten Spulenträger betreiben wird, wenn der erste Spulenträger abgehängt ist.

29. Vorrichtung nach Anspruch 25, worin die automatische Spleißvorrichtung und der erste Spulenträger so ausgebildet sind, dass der erste Spulenträger mit verschiedenen ersten Haspeln für die ersten Faserstränge belegt werden kann, während der erste Spulenträger von der Faserauflegevorrichtung getrennt ist.

## Revendications

1. Procédé pour assister un opérateur lors du collage de l'extrémité arrière d'une première étoupe à l'extrémité avant d'une deuxième étoupe, dans lequel la première étoupe est alimentée depuis une première bobine de la première étoupe vers une tête de positionnement d'une machine de positionnement de fibres, et la deuxième étoupe est alimentée depuis une deuxième bobine de la deuxième étoupe, le procédé comprenant l'étape consistant à exécuter l'opération de collage avec un appareil de collage automatique ayant un dispositif de soudage actionné par opérateur pour serrer l'une contre l'autre des parties en chevauchement de l'extrémité arrière de la première étoupe et de l'extrémité avant de la deuxième étoupe, et appliquer de la chaleur à celles-ci.

2. Procédé selon la revendication 1, comprenant en outre les étapes :
■ d'initiation, par l'opérateur, d'une première phase du processus de collage, exécutée par un appareil de collage automatique, dans laquelle l'appareil de collage automatique serre séquentiellement l'extrémité arrière de la première étoupe s'étendant depuis la tête de positionnement de fibres, et rogne l'extrémité arrière de la première étoupe sur une longueur souhaitée pour former une extrémité arrière rognée de la première étoupe ;
■ d'alimentation, par l'opérateur, de l'extrémité avant de la deuxième étoupe dans l'appareil de collage automatique, l'appareil de collage automatique guidant l'extrémité avant dans une position de chevauchement adjacente à l'extrémité arrière rognée de la première étoupe, pour former des parties en chevauchement de la première et de la deuxième étoupe ; et
■ d'initiation, par l'opérateur, d'une deuxième phase du processus de collage, exécutée par l'appareil de collage automatique, dans laquelle l'appareil de collage automatique soude l'une à l'autre les parties en chevauchement de la première et de la deuxième étoupe, puis desserre l'extrémité arrière de la première étoupe.

3. Procédé selon la revendication 2, comprenant en outre les étapes consistant à :
■ détecter une condition de niveau faible de matériau dans la première bobine de la première étoupe ;
■ arrêter l'alimentation de la première étoupe vers la tête de positionnement de fibres avant l'initiation de la première phase du processus de collage ; et
■ recommencer l'alimentation de l'extrémité arrière rognée de la première étoupe, sur laquelle est soudée la deuxième étoupe, vers la tête de positionnement de fibres, suite à l'achèvement de la deuxième phase du processus de collage.

4. Procédé selon la revendication 3, dans lequel la première bobine est opérationnellement montée dans un porte-bobines opérationnellement fixé à la tête de positionnement de fibres, et le procédé comprend en outre le remplacement, par l'opérateur de la première bobine par la deuxième bobine, en retirant la première bobine et en montant opérationnellement la deuxième bobine dans le porte-bobines à la place de la première bobine, entre la première et la deuxième phase du processus de collage.

5. Procédé selon la revendication 3, dans lequel la première et la deuxième bobine sont montées séparément de manière opérationnelle dans un porte-bobines opérationnellement fixé à la tête de positionnement de fibres, seule la première bobine étant opérationnellement reliée à la tête de positionnement de fibres avant l'initiation du processus de collage, et le procédé comprend en outre l'alimentation par l'opérateur de l'extrémité avant de la deuxième étoupe dans l'appareil de collage automatique, entre la première et la deuxième phase du processus de collage.

6. Procédé selon la revendication 2, dans lequel le soudage des parties en chevauchement de la première et de la deuxième étoupe comprend les étapes consistant à :
■ serrer mutuellement les parties en chevauchement de la première et de la deuxième étoupe entre une tête de soudage et une surface de support au moyen d'une pression de serrage ;
■ appliquer de la chaleur aux parties en chevauchement au moyen de la tête de soudage, pendant un certain laps de temps, pour souder ainsi l'une à l'autre les parties en chevauchement ; et
■ desserrer les parties en chevauchement suite à l'achèvement du soudage.

7. Procédé selon la revendication 6, comprenant en outre l'étape consistant à réguler un ou plusieurs paramètres parmi la pression de serrage, la chaleur appliquée par la tête de soudage, et le laps de temps, à une valeur voulue de ceux-ci.

8. Procédé selon la revendication 6, dans lequel le soudage des parties en chevauchement de la première et de la deuxième étoupe comprend en outre l'étape consistant à refroidir les parties en chevauchement suite à la formation de la soudure.

9. Procédé selon la revendication 2, dans lequel la première bobine est opérationnellement montée dans un premier porte-bobines, et la deuxième bobine est opérationnellement montée dans un deuxième porte-bobines, le premier et le deuxième porte-bobines étant configurés pour une fixation opérationnelle alternée sur la machine de positionnement de fibres, et le procédé comprend en outre l'étape consistant à détacher le premier porte-bobines de la machine de positionnement de fibres et fixer opérationnellement le deuxième porte-bobines à la machine de positionnement de fibres à la place du premier porte-bobines.

10. Procédé selon la revendication 9, comprenant en outre l'étape consistant à actionner la machine de positionnement de fibres avec une deuxième étoupe provenant du deuxième porte-bobines, tandis que le premier porte-bobines est détaché.

11. Procédé selon la revendication 9, dans lequel :
■ l'appareil de collage automatique a une première extrémité reliée de manière fixe à la machine de positionnement de fibres pour serrer et rogner l'extrémité arrière de la première étoupe, et pour souder les parties en chevauchement de la première et de la deuxième étoupe ;
■ l'appareil de collage automatique a de multiples deuxièmes moitiés, une des multiples deuxièmes moitiés étant reliée de manière fixe au premier porte-bobines et une autre des multiples deuxièmes moitiés étant reliée de manière fixe au deuxième porte-bobines ;
■ les deuxièmes moitiés étant configurées pour serrer les extrémités avant respectives de la première et de la deuxième étoupe dans le premier et le deuxième porte-bobines respectivement, quand le premier et le deuxième porte-bobines ne sont pas opérationnellement reliés à la machine de positionnement de fibres ;
■ les deuxièmes moitiés étant en outre configurées pour alimenter les extrémités avant des première et deuxième étoupes, respectivement, dans la première moitié de l'appareil de collage automatique, quand le premier ou deuxième porte-bobines respectif est opérationnellement fixé à la machine de positionnement de fibres ; et
■ le procédé comprend en outre l'étape consistant à serrer les extrémités avant respectives de la première et de la deuxième étoupe à l'intérieur des premier et deuxième porte-bobines respectivement, quand le premier et deuxième porte-bobines ne sont pas opérationnellement fixés à la machine de positionnement de fibres.

12. Procédé selon la revendication 11, comprenant en outre l'étape consistant à alimenter les extrémités avant de la première et de la deuxième étoupe, respectivement, dans la première moitié de l'appareil de collage automatique, quand le premier ou le deuxième porte-bobines respectif est opérationnellement fixé à la machine de positionnement de fibres, et la deuxième phase du processus de collage automatique est initiée.

13. Procédé selon la revendication 11, dans lequel la tête de positionnement de fibres reçoit de multiples premières étoupes depuis de multiples premières bobines du premier porte-bobines, le deuxième porte-bobines comprend de multiples deuxièmes bobines pour alimenter de multiples deuxièmes étoupes vers la tête de positionnement de fibres, et la première phase du processus de collage du procédé comprend en outre l'étape consistant à serrer et rogner simultanément toutes les premières étoupes, avant le détachement du premier porte-bobines de la machine de positionnement de fibres.

14. Procédé selon la revendication 1, comprenant en outre l'étape consistant à actionner la machine de positionnement de fibres avec les multiples deuxièmes étoupes provenant du deuxième porte-bobines, pendant que le premier porte-bobines est détaché.

15. Procédé selon la revendication 14, comprenant en outre l'étape consistant à remplir de nouveau le premier porte-bobines d'autres premières bobines d'étoupes, pendant que le premier porte-bobines est détaché de la machine de positionnement de fibres.

16. Appareil de collage automatique pour assister un opérateur lors du collage de l'extrémité arrière d'une première étoupe à l'extrémité avant d'une deuxième étoupe, dans lequel la première étoupe est alimentée depuis une première bobine du premier porte-bobines vers une tête de positionnement de fibres d'une machine de positionnement de fibres, et la deuxième étoupe est alimentée depuis une deuxième bobine du deuxième porte-bobines, l'appareil de collage automatique comprenant un dispositif de soudage actionné par opérateur pour serrer l'une contre l'autre des parties en chevauchement de l'extrémité arrière de la première étoupe et de l'extrémité avant de la deuxième étoupe, et leur appliquer de la chaleur.

17. Appareil selon la revendication 16, comprenant en outre :
■ un dispositif de serrage d'extrémité arrière, un dispositif de rognage d'extrémité arrière, un dispositif de soudage et un élément de régulation à deux positions actionné par opérateur reliant opérationnellement le dispositif de serrage d'extrémité arrière, le dispositif de rognage d'extrémité arrière, et le dispositif de soudage ;
■ le dispositif de serrage d'extrémité arrière, le dispositif de rognage d'extrémité arrière, le dispositif de soudage et l'élément de régulation à deux positions actionné par opérateur, étant opérationnellement disposés et interconnectés de telle manière que lorsque l'opérateur déplace l'élément de régulation de la première position à la deuxième position de celui-ci, l'appareil de collage automatique initie une première phase d'un processus de collage séquentiel automatisé, dans lequel le dispositif de serrage d'extrémité arrière serre l'extrémité arrière de la première étoupe s'étendant à partir de la tête de positionnement de fibres, puis le dispositif de rognage d'extrémité arrière rogne l'extrémité arrière de la première étoupe sur une longueur souhaitée pour former une extrémité arrière rognée de la première étoupe ;
■ le dispositif de serrage d'extrémité arrière, le dispositif de rognage d'extrémité arrière, le dispositif de soudage et l'élément de régulation à deux positions actionné par opérateur, étant également opérationnellement disposés et interconnectés de telle manière que, suite à la première phase du processus de collage, l'opérateur puisse insérer l'extrémité avant de la deuxième étoupe dans l'appareil de collage automatique, l'appareil de collage automatique guidant l'extrémité avant dans une position de chevauchement de manière adjacente à l'extrémité arrière rognée de la première étoupe, pour former des parties en chevauchement de la première et de la deuxième étoupe ; et
■ le dispositif de serrage d'extrémité arrière, le dispositif de rognage d'extrémité arrière, le dispositif de soudage et l'élément de régulation à deux positions actionné par opérateur, étant en outre opérationnellement disposés et interconnectés de telle manière que, suite à l'insertion de l'extrémité avant de la deuxième étoupe dans l'appareil de collage automatique, l'opérateur peut remettre l'élément de régulation dans la première position de celui-ci, pour initier une deuxième phase du processus de collage par l'appareil de collage automatique, dans lequel le dispositif de soudage de l'appareil de collage automatique soude l'une à l'autre les parties en chevauchement de la première et de la deuxième étoupe, puis desserre le dispositif de serrage d'extrémité arrière pour libérer l'extrémité arrière de la première étoupe sur laquelle est soudée l'extrémité avant de la deuxième étoupe.

18. Appareil selon la revendication 17, comprenant en outre un détecteur de niveau faible de matériau opérationnellement fixé à la première bobine d'étoupe, pour détecter une condition de niveau faible de matériau dans la première bobine de la première étoupe, et rapporter la condition de niveau faible de matériau, de sorte que l'alimentation de la première bobine vers la tête de positionnement de fibres puisse être arrêtée avant l'initiation de la première phase du processus de collage, cependant que l'extrémité arrière de la première étoupe est toujours disposée dans l'appareil de collage automatique.

19. Appareil selon la revendication 17, dans lequel la première bobine est opérationnellement montée dans un porte-bobines opérationnellement fixé à la tête de positionnement de fibres, et l'élément de régulation est configuré pour retenir indéfiniment l'extrémité arrière de la première étoupe dans la condition serrée et rognée, jusqu'à ce que l'opérateur remette l'élément de régulation à la première position de celui-ci, pour donner ainsi à l'opérateur tout le temps nécessaire pour effectuer une ou plusieurs des activités suivantes :
remplacer la première bobine par la deuxième bobine, en retirant la première bobine et en montant opérationnellement la deuxième bobine dans le porte-bobines à la place de la première bobine, entre la première et la deuxième phase du processus de collage, ou
lorsque la première et la deuxième bobine sont distinctement montées de manière opérationnelle dans un porte-bobines opérationnellement fixé à la tête de positionnement de fibres, seule la première bobine étant opérationnellement reliée à la tête de positionnement de fibres avant l'initiation du processus de collage, l'opérateur alimentant l'extrémité avant de la deuxième étoupe dans l'appareil de collage automatique, entre la première et la deuxième phase du processus de collage.

20. Appareil selon la revendication 17, dans lequel le dispositif de soudage comprend une tête de soudage et une surface de support :
■ la tête de soudage et la surface de support étant configurées de manière complémentaire pour serrer ensemble les parties en chevauchement de la première et de la deuxième étoupe, entre la tête de soudage et la surface de support, avec une pression de serrage ;
■ la tête de soudage étant aussi configurée pour appliquer de la chaleur aux parties en chevauchement, pendant un laps de temps, pour souder ainsi l'une à l'autre les parties en chevauchement, et
■ la tête de soudage étant en outre configurée pour desserrer les parties en chevauchement de la première et de la deuxième étoupe suite à l'achèvement de la soudure.

21. Appareil selon la revendication 20, comprenant en outre un contrôleur de soudage opérationnellement relié pour réguler un ou plusieurs paramètres parmi la pression de serrage, la chaleur appliquée par la tête de soudage, et le laps de temps, à une valeur voulue de ceux-ci.

22. Appareil selon la revendication 20, dans lequel le dispositif de soudage est en outre configuré pour refroidir les parties en chevauchement de la première et de la deuxième bobine suite à la formation de la soudure.

23. Appareil selon la revendication 17, dans lequel la première bobine est opérationnellement montée dans un premier porte-bobine, et la deuxième bobine est opérationnellement montée dans un deuxième porte-bobine, la première et la deuxième bobine étant configurées pour une fixation opérationnelle alternée sur la machine de positionnement de fibres.

24. Appareil selon la revendication 23, dans lequel la machine de positionnement de fibres est actionnable pendant que la deuxième étoupe est alimentée par le deuxième porte-bobines tandis que le premier porte-bobines est détaché.

25. Appareil selon la revendication 23, dans lequel :
■ l'appareil de collage automatique a une première moitié de celui-ci relié de manière fixe à la machine de positionnement de fibres pour serrer et rogner l'extrémité arrière de la première étoupe, et pour souder les parties en chevauchement de la première et de la deuxième étoupes ;
■ l'appareil de collage automatique a de multiples deuxièmes moitiés de celui-ci, une des multiples deuxièmes moitiés étant reliée de manière fixe au premier porte-bobines et une autre des multiples deuxièmes moitiés étant reliée de manière fixe au deuxième porte-bobines ;
■ les deuxièmes moitiés étant en outre configurées pour alimenter les extrémités avant respectives de la première et de la deuxième bobine dans le premier et le deuxième porte-bobines respectivement, quand le premier et le deuxième porte-bobines ne sont pas opérationnellement reliés à la machine de positionnement de fibres ;
■ les deuxièmes moitiés étant en outre configurées pour alimenter les extrémités avant de la première et de la deuxième étoupe, respectivement dans la première moitié de l'appareil de collage automatique, quand le premier ou le deuxième porte-bobines respectif est opérationnellement fixé à la machine de positionnement de fibres ; et
■ l'appareil étant configuré pour serrer les extrémités avant respectives de la première et de la deuxième bobine dans le premier et le deuxième porte-bobines respectivement, quand le premier et le deuxième porte-bobines ne sont pas opérationnellement reliés à la machine de positionnement de fibres.

26. Appareil selon la revendication 25, dans lequel la première moitié de l'appareil de collage automatique comprend un rouleau d'alimentation opérationnellement configuré et relié de manière à alimenter les extrémités avant de la première et de la deuxième étoupe respectivement, vers la deuxième moitié de l'appareil de collage automatique, quand le premier ou le deuxième porte-étoupe respectif est opérationnellement relié à la machine de positionnement de fibres, et la deuxième phase du processus de collage est initiée.

27. Appareil selon la revendication 25, dans lequel la tête de positionnement de fibres reçoit de multiples premières étoupes depuis de multiples premières bobines du premier porte-bobines, le deuxième porte-bobines comprend de multiples deuxièmes bobines pour alimenter de multiples deuxièmes étoupes vers la machine de positionnement de fibres, et la première moitié de l'appareil de collage automatique est configurée pour serrer et rogner simultanément toutes les premières étoupes quand la première phase du processus de collage est initiée, avant le détachement du premier porte-bobines de la machine de positionnement de fibres.

28. Appareil selon la revendication 25, dans lequel l'appareil de collage automatique et le deuxième porte-bobines sont configurés pour faire fonctionner la machine de positionnement de fibres avec les multiples deuxièmes étoupes provenant de la deuxième bobine, tandis que le premier porte-bobines est détaché.

29. Appareil selon la revendication 25, dans lequel l'appareil de collage automatique et le premier porte-bobines sont configurés de telle sorte que le premier porte-bobines puisse être rechargé de premières bobines différentes de premières étoupes, pendant que le premier porte-bobines est détaché de la machine de positionnement de fibres.
